# FASCICULE DE BREVET EUROPEEN

(11) **EP 1 758 220 B1**
(45) Date de publication et mention de la délivrance du brevet: **10.09.2008**
(21) Numéro de dépôt: 06291182.1
(22) Date de dépôt: 20.07.2006
(51) Int. Cl.: H02G 3/08

(54) **Element perfectionne de paroi a traverse etanche**
Verbessertes Element für abgedichtete Wanddurchführung
Improved element for sealed wall feedthrough

(30) Priorité: 23.08.2005 FR 0508687
(43) Date de publication de la demande: 28.02.2007
(73) Titulaire: LEGRAND FRANCE, 87000 Limoges (FR); LEGRAND SNC, 87000 Limoges (FR)
(72) Inventeur: Desissard, Olivier, 87510 Saint Jouvent (FR); Dupuy, Sébastien, 87500 Saint Yrieix La Perche (FR); Fourcade, Jean-Pierre, 87920 Condat Sur Vienne (FR); Liboutet, Jean-Marc, 87280 Beaune Les Mines (FR)
(74) Mandataire: Bentz, Jean-Paul

(56) Documents cités:
- EP-A- 1 363 376
- FR-A- 1 388 822
- FR-A- 2 689 331

## Description

L'invention concerne, de façon générale, les techniques de câblage, notamment dans le domaine de l'électricité.

Plus précisément, l'invention concerne un élément de paroi à traversée étanche, notamment pour boîtier étanche, comprenant un cadre rigide et une membrane en matériau élastomère portée par le cadre et l'obturant, cette membrane présentant au moins des première et deuxième zones traversables de façon étanche et respectivement bordées vers l'extérieur par des premier et deuxième anneaux de moindre résistance dont le second entoure le premier.

Un tel élément de paroi s'inscrit dans un état de la technique notamment illustré par les brevets FR 2 689 331 et FR 2 799 059 du même déposant.

Plus généralement, de tels éléments de paroi, éventuellement amovibles, sont notamment connus de l'homme du métier dans leur application aux boîtiers étanches de connexion électrique.

Pour optimiser la qualité de l'étanchéité, il est connu de donner à la membrane élastomère des propriétés élastiques marquées en vue de lui permettre d'enserrer avec force le câble ou le tube qui la traverse, même en cas de désaxage de ce câble ou de ce tube par rapport au centre de la membrane.

Cependant, lorsqu'une telle membrane est dotée d'une zone interne perforable ou détachable par déchirure, la poussée ou la traction exercée sur la membrane pour perforer ou déchirer cette zone provoque une déformation non maîtrisée, et fait notamment apparaître le risque, qu'il convient de prévenir, que la membrane se perfore difficilement ou qu'elle se déchire en dehors du tracé de la ligne de fragilité.

La conception des éléments de paroi se heurte aujourd'hui à la difficulté de trouver un compromis capable de répondre, de manière satisfaisante, à ces deux besoins antinomiques.

A cette fin, l'élément de paroi de l'invention, par ailleurs conforme à la définition générique qu'en donne le préambule ci-dessus, est essentiellement caractérisé en ce que la membrane comprend en outre un soufflet annulaire entourant le deuxième anneau et une zone annulaire externe s'étendant entre le soufflet et le cadre et présentant une raideur supérieure à celle du soufflet.

De préférence, la zone annulaire externe comprend un boudin bordant le soufflet vers l'extérieur et une zone périphérique s'étendant entre le boudin et le cadre.

Le boudin présente avantageusement une épaisseur supérieure à celle de la zone périphérique, cette zone périphérique pouvant elle-même présenter une épaisseur supérieure à celle du soufflet et être sensiblement plane.

La deuxième zone traversable peut alors facilement être dotée d'une languette facilitant sa préhension en vue de son arrachement.

Les premier et deuxième anneaux ont avantageusement des formes convexes et homothétiques l'une de l'autre, ces anneaux étant par exemple circulaires ou polygonaux.

En outre, ces anneaux et le soufflet sont de préférence concentriques.

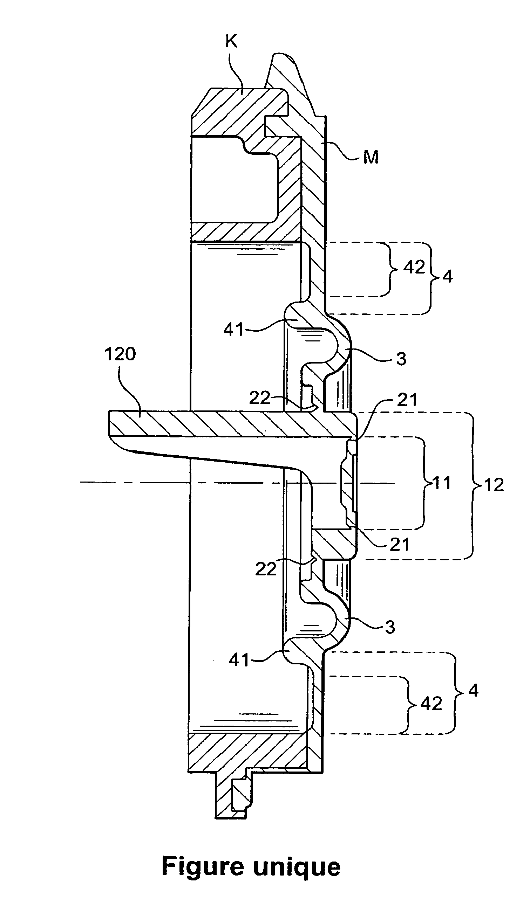

D'autres caractéristiques et avantages de l'invention ressortiront clairement de la description qui en est faite ci-après, à titre indicatif et nullement limitatif, en référence au dessin annexé dont la figure unique est une vue en coupe d'un élément de paroi conforme à l'invention.

Comme annoncé précédemment, cet élément de paroi est conçu pour pouvoir s'intégrer à la paroi d'un boîtier ou la constituer, et pour pouvoir être traversé de façon étanche par un câble, typiquement un câble électrique, ou par un tube.

Cet élément de paroi comprend principalement un cadre rigide K et une membrane M en matériau élastomère, cette membrane étant portée par le cadre K et l'obturant.

La membrane M présente plusieurs zones traversables de façon étanche, par exemple deux zones 11 et 12, dont chacune est bordée vers l'extérieur par un anneau de moindre résistance, tel que 21 et 22, l'anneau 22 entourant l'anneau 21.

La zone 11, de plus petite dimension relative, peut être perforée pour permettre le passage d'un câble ou d'un conduit de câble de faible diamètre, tandis que la zone 12, de plus grande dimension relative, peut être déchirée pour permettre le passage d'un câble ou d'un conduit de plus gros diamètre.

Selon l'invention, la membrane comprend en outre un soufflet 3 et une zone annulaire externe 4.

Le soufflet 3, de forme annulaire, entoure le deuxième anneau 22.

La zone annulaire externe 4, qui s'étend entre le soufflet 3 et le cadre K, présente une raideur supérieure à celle du soufflet 3.

Par exemple, la zone annulaire externe 4 comprend un boudin 41 qui borde le soufflet 3 vers l'extérieur, et une zone périphérique 42 qui s'étend entre le boudin 41 et le cadre K.

Pour assurer à la zone annulaire externe 4 une raideur supérieure à celle du soufflet 3, il est souhaitable de prévoir que le boudin 41 présente une épaisseur supérieure à celle de la zone périphérique 42, et que cette zone périphérique 42, qui est par exemple plane, présente elle-même une épaisseur supérieure à celle du soufflet 3.

Selon une technique connue en soi, l'une au moins des zones traversables, par exemple la zone 12, peut être dotée d'une languette 120 facilitant sa préhension en vue de son arrachement.

Les anneaux 21 et 22, ainsi que le soufflet 3, ont très avantageusement des formes convexes, concentriques, et homothétiques l'une de l'autre, et sont par exemple circulaires ou polygonaux.

L'élément de paroi de l'invention peut, de façon connue en soi, être réalisé par surmoulage de la membrane M sur le cadre K, le cadre K étant constitué par un polymère thermoplastique rigide et la membrane M par un élastomère tel que le styrène-éthylène-butadiène-styrène (SEBS).

## Revendications

1. Elément de paroi à traversée étanche, notamment pour boîtier étanche, comprenant un cadre rigide (K) et une membrane (M) en matériau élastomère portée par le cadre (K) et l'obturant, cette membrane (M) présentant au moins des première et deuxième zones (11, 12) traversables de façon étanche et respectivement bordées vers l'extérieur par des premier et deuxième anneaux (21, 22) de moindre résistance dont le second (22) entoure le premier (21), **caractérisé en ce que** la membrane comprend en outre un soufflet annulaire (3) entourant le deuxième anneau (22) et une zone annulaire externe (4) s'étendant entre le soufflet (3) et le cadre (K) et présentant une raideur supérieure à celle du soufflet (3), et **en ce que** la zone annulaire externe (4) comprend un boudin (41) bordant le soufflet (3) vers l'extérieur et une zone périphérique (42) s'étendant entre le boudin (41) et le cadre (K).

2. Elément de paroi suivant la revendication 1, **caractérisé en ce que** le boudin (41) présente une épaisseur supérieure à celle de la zone périphérique (42).

3. Elément de paroi suivant la revendication 1 ou 2, **caractérisé en ce que** la zone périphérique (42) présente une épaisseur supérieure à celle du soufflet (3).

4. Elément de paroi suivant l'une quelconque des revendications précédentes, **caractérisé en ce que** la deuxième zone traversable (12) est dotée d'une languette (120) facilitant sa préhension en vue de son arrachement.

5. Elément de paroi suivant l'une quelconque des revendications précédentes, **caractérisé en ce que** la zone périphérique (42) est sensiblement plane.

6. Elément de paroi suivant l'une quelconque des revendications précédentes, **caractérisé en ce que** les premier et deuxième anneaux (21, 22) ont une forme convexe.

7. Elément de paroi suivant la revendication 6, **caractérisé en ce que** les premier et deuxième anneaux (21, 22) sont circulaires.

8. Elément de paroi suivant la revendication 6, **caractérisé en ce que** les premier et deuxième anneaux (21, 22) ont des formes polygonales respectives homothétiques l'une de l'autre.

9. Elément de paroi suivant l'une quelconque des revendications précédentes, **caractérisé en ce que** les premier et deuxième anneaux (21, 22) et le soufflet (3) sont concentriques.

## Claims

1. Wall element with sealed through-hole, particularly for a sealed casing, comprising a rigid frame (K) and a membrane (M) made of elastomer supported by the frame (K) and blocking it off, this membrane (M) having at least first and second zones (11, 12) that can be traversed in a sealed manner and respectively bordered towards the outside by first and second rings (21, 22) of lesser resistance whereof the second (22) surrounds the first (21), **characterized in that** the membrane also comprises an annular bellows (3) surrounding the second ring (22) and an outer annular zone (4) extending between the bellows (3) and the frame (K) and having a stiffness that is greater than that of the bellows (3), and **in that** the outer annular zone (4) comprises a flange (41) bordering the bellows (3) towards the outside and a peripheral zone (42) extending between the flange (41) and the frame (K).

2. Wall element according to Claim 1, **characterized in that** the flange (41) has a thickness that is greater than that of the peripheral zone (42).

3. Wall element according to Claim 1 or 2, **characterized in that** the peripheral zone (42) has a thickness that is greater than that of the bellows (3).

4. Wall element according to any one of the preceding claims, **characterized in that** the second traversable zone (12) is furnished with a tongue (120) making it easier to grip for the purpose of pulling it out.

5. Wall element according to any one of the preceding claims, **characterized in that** the peripheral zone (42) is substantially flat.

6. Wall element according to any one of the preceding claims, **characterized in that** the first and second rings (21, 22) have a convex shape.

7. Wall element according to Claim 6, **characterized in that** the first and second rings (21, 22) are circular.

8. Wall element according to Claim 6, **characterized in that** the first and second rings (21, 22) have respective polygonal shapes homothetic with one another.

9. Wall element according to any one of the preceding claims, **characterized in that** the first and second rings (21, 22) and the bellows (3) are concentric.

## Patentansprüche

1. Wandelement mit einem dichten Durchgang, insbesondere für ein dichtes Gehäuse, mit einem steifen Rahmen (K) und einer Membrane (M) aus elastomerem Material, die durch den Rahmen (K) getragen wird und diesen verschließt, wobei diese Membrane (M) aufweist wenigstens eine erste und eine zweite Zone (11, 12), die in dichter Weise durchquerbar sind und jeweils nach außen durch einen ersten und einen zweiten Ring (21, 22) von geringerem Widerstand umrandet sind, von denen der zweite (22) den ersten (21) umschließt, **dadurch gekennzeichnet, dass** die Membrane ferner aufweist einen ringförmigen Balg (3), der den zweiten Ring (22) umschließt, und eine äußere Ringzone (4), die sich zwischen dem Balg (3) und dem Rahmen (K) erstreckt und einen größeren Radius als der Balg (3) aufweist, und dass die äußere Ringzone (4) aufweist eine Wulst (41), welche den Balg (3) nach außen umrandet, und eine Umfangszone (42), die sich zwischen dem Wulst (41) und dem Rahmen (K) erstreckt.

2. Wandelement nach Anspruch 1, **dadurch gekennzeichnet, dass** die Wulst (41) eine größere Dicke als die Umfangszone (42) aufweist.

3. Wandelement nach Anspruch 1 oder 2, **dadurch gekennzeichnet, dass** die Umfangszone (42) eine größere Dicke als der Balg (3) aufweist.

4. Wandelement nach einem der vorhergehenden Ansprüche, **dadurch gekennzeichnet, dass** die zweite Durchgangszone (12) mit einer Zunge (120) versehen ist, die ein Anfassen desselben bei dessen Herausziehen erleichtert.

5. Wandelement nach einem der vorhergehenden Ansprüche, **dadurch gekennzeichnet, dass** die Umfangszone (42) im Wesentlichen eben ist.

6. Wandelement nach einem der vorhergehenden Ansprüche, **dadurch gekennzeichnet, dass** der erste und zweite Ring (21, 22) eine konvexe Form haben.

7. Wandelement nach Anspruch 6, **dadurch gekennzeichnet, dass** der erste und zweite Ring (21, 22) kreisförmig sind.

8. Wandelement nach Anspruch 6, **dadurch gekennzeichnet, dass** der erste und zweite Ring (21, 22) jeweils polygonale, zueinander homothetische Formen haben.

9. Wandelement nach einem der vorhergehenden Ansprüche, **dadurch gekennzeichnet, dass** der erste und zweite Ring (21, 22) und der Balg (3) konzentrisch sind.
